# EUROPEAN PATENT SPECIFICATION

(11) **EP 1 286 597 B1**
(45) Date of publication and mention of the grant of the patent: **26.12.2012**
(21) Application number: 01924069.6
(22) Date of filing: 26.04.2001
(51) Int. Cl.: A23C 9/13, A23L 2/00

(54) **LIPID COMPOSITION AND USE THEREOF**
FETTZUSAMMENSETZUNG UND VERWENDUNG DERSELBEN
COMPOSITION LIPIDIQUE ET SON UTILISATION

(30) Priority: 26.04.2000 SE 0001494
(43) Date of publication of application: 05.03.2003
(73) Proprietor: Skånemejerier AB, 205 03 Malmö (SE)
(72) Inventor: NYBERG, Lena, S-224 72 Lund (SE)
(74) Representative: Bengtsson, Peggy Katrin
(86) International application number: PCT/SE2001/000887
(87) International publication number: WO 2001/080656

(56) References cited:
- EP-A2- 0 773 283
- CN-A- 1 108 891
- CN-A- 1 135 290
- US-A- 4 851 251
- DATABASE WPI Week 9429, Derwent Publications Ltd., London, GB; AN 1994-237558, XP002945560 & JP 6 169 735 A (NIPPON OILS & FATS CO LTD) 21 June 1994
- PATENT ABSTRACTS OF JAPAN & JP 04 131 043 A (TSUKISHIMA SHIYOKUHIN KOUGIYOU KK) 01 May 1992

## Description

### Field of the invention

The present invention relates to a composition comprising a milk or aqueous portion, a protecting oil and one or more polyunsaturated fatty acids (PUFAs), to an emulsion product containing such composition, to food products comprising such composition or emulsion and to a method of producing such an emulsion product. The composition, as well as the emulsion product and/or food product based thereon, is free from any offensive flavour, especially any smell or taste of fish and any cooked taste or smell.

### Background of the invention

Polyunsaturated fatty acids play a critical role in maintaining good health and ensuring normal development in humans as well as other animals. PUFAs are made up of hydro carbon chains that differ in length and the number and position of double bonds. These differences determine PUFAs' biological properties. A variety of unsaturated fatty acids can be formed in the organism by a combination of elongation and unsaturation reactions. However, mammals lack the enzymes to endo-geneously synthesise linoleic acid and alpha-linolenic acid. Linoleic acid and alpha-linolenic acid are the 'essential' fatty acids, which have to be furnished by the diet. They are converted into other PUFAs by way of unsaturation and elongation. Highly unsaturated omega-6 and omega-3 fatty acids can be made, in this way, in the body as well as other important compounds, such as eicosanoids.

Molecules with the first double bond between the sixth and the seventh carbon atom from the methyl end are called omega-6 or n-6 fatty acids, an example of such an acid being (the essential n-6 PUFA) linoleic acid. Molecules with the first double bond between the third and the fourth carbon atom, counted from the methyl end, are called omega-3 or n-3 fatty acids, an example of such an acid being (the essential n-3 PUFA,) alpha-linolenic acid (ALA). ALA is elongated and unsaturated in the human body into eicosapentaenoic acid (EPA) and further to docosahexaenoic acid (DHA). However, studies in humans have shown that the convertion of ALA into longer and more unsaturated fatty acids, e.g.the important DHA is severely restricted (Gerster, Int J Vitam Res, 1998;68:159-173).

Omega-3 fatty acids have antiinflammatory, antithrombotic, antiarrhythmic, hypolipidemic, and vasodilatory properties (Simopoulos AP J Nutr, 1989; 119:521-8). These beneficial effects of omega-3 fatty acids have been shown in the prevention of coronary heart disease, hypertension, type 2 diabetes, and, in some patients with renal disease, rheumatoid arthritis, ulcerative colitis, Crohn's disease, and chronic obstructive pulmonary disease (Simopoulos AP, Am J Clin Nutr, 1999; 70:560-569). Furthermore, it is well known that the omega-3 PUFAs play an important role during pregnancy and lactation for the development of infants (Makrides & Gibson, Am J Clin Nutr, 2000; 71:307-311).

The primary sources of long chain omega-3 PUFAs are fatty fish and fish oil or fish oil concentrates. Other sources are oils from certain micro algae and phytoplankton (Simpoloulos, Am J Clin Nutr, 1999; 70:560-569). Fish (oil) consumption is rather low in most western countries; as a result, the n-3 PUFA status in western populations is also low. It may be too low in certain risk groups like pregnant women, neonates, elderly persons, diabetic patients, sportsmen, etc. Besides pregnant women are today advised against eating fish, due to environmental poison.

Omega-6 fatty acids are present in many vegetable oils. One important member of the Omega-6 family is linoleic acid, which is present for example, in olive oil, corn oil, sunflower oil, soybean oil and linseed oil, but also in margarine. Linoleic acid is metabolized in the human body to gamma-linolenic acid (C18:3/ω-6), dihomagamma-linolenic acid (20:3/ω-6) and arachidonic acid (C20:4/ω-6).

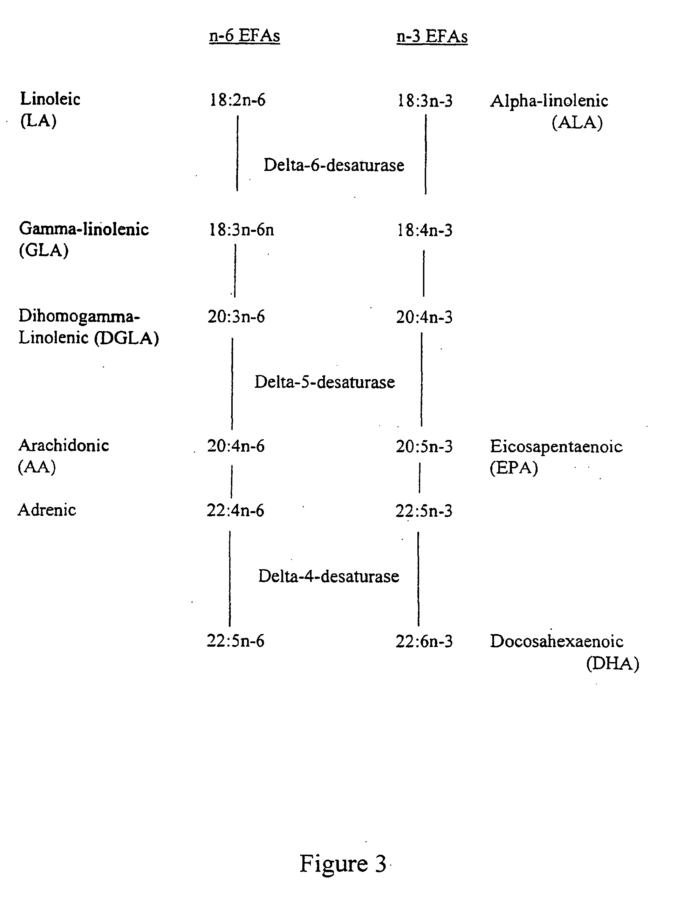

Alpha-linolenic acid (ALA) in the omega-3 series of fatty acids occurs in green leafy vegetables and is, for example, also main constituent of linseed oil. Alpha-linolenic acid can be converted in the body, by means of special enzymes, to eicosapentaenoic acid C20:5 (EPA) and dococahexaenoic acid C22:6 (DHA) (Fig. 3).

The latter two polyene fatty acids perform important physiological functions in the human body. They pay a pivotal role in human biochemical processes, and represent early stages in the synthesis of highly active tissue hormones (prostaglandins, thromboxnes, leukotrienes) [P. Singer"Was sind, wie wirken Omega-3-Fettsaüren?", Umschau Zeitschriftenverlag (1995)]. The conversion of alpha-linolenic acid (ALA) to EPA and DHA occurs very slowly in humans, however, and is limited. This is why our bodies should be supplied with these polyunsaturated substances from the omega-3 fatty acid family through nutrition.

The most important sources of eicosapentaenoic acid and docosahexaenoic acid are fatty, cold-water ocean fish which feed on the phytoplankton that are abundant in northern seas. The cell membranes of these tiny plants must be particularly "fluid" so they can survive in the ice-cold water; they achieve this by incorporating omega-3 fatty acids with a low solidification point. Fish with particularly high levels of omega -3 fatty acids include mackerel, herring, tuna, sardines, salmon, pollack, sturgeon, anchovies, sprats and halibut. The high concentration of polyene fatty acids makes the cell membranes of these fish more "fluid" and allows them to adapt to the low water temperatures; this therefore constitutes a biological precondition for survival in ice-cold water [P. Singer"Was sind, wie wirken Omega-3-Fettsaüren?", Umschau Zeitschriftenverlag (1995)]. The fats and liver oils of these cold-water fish consist predominantly of triacylglycerols with a relatively high proportion of polyunsaturated fatty acids. Particularly characteristics are highly unsaturated C20 and C22 fatty acids with five and six double bonds, i.e EPA and DHA. The higher the fat concentration in the cold-water fish, the more omega-3 fatty acids are present in its flesh. Most natural fish oils have a concentration of omega-3 fatty acids of between 30 and 40%.

The presence of double bonds in PUFAs makes the molecules susceptible to oxidation and they quickly become rancid which gives the final product an unpleasant taste and smell, e.g. fishy off-flavour in fish oils. The appearance of off-flavours in products comprising PUFAs is a major problem and an increase of the omega-3 PUFA consumption may thus be compromised by taste problems. Furthermore many people do not like fish (not to mention fish oil). This problem can only partly be prevented by the consumption of fish oil-containing capsules. Many people experience difficulties in swallowing capsules, moreover, a fishy aftertaste is rather common, just like abdominal cramps, bloating, eructation and flatulence. Health professionals often discourage the use of capsules; they rather advice to optimise the habitual diet. Therefore, there is a need for the availability of tasty food products containing PUFAs.

Given the association of products available today and the change in life style, there is clearly a need for new improved PUFA products to be able to maintain the levels of PUFA, especially omega-3 PUFA, necessary for preservation of good human health.

On addition of fish oil to milk a fishy off-flavour immediately occurs, even if the oil itself does not have any off-flavour.

A further problem appearing in connection with the preparation of milk and milk products is the fact that sterilisation and high temperature treatment of milk and milk products result in an unpleasant cooked taste.

CN 1135290 and CN 1108891 both describe milk products, especially milk powders, containing omega-3 PUFA.

EP 893 064 describes a liquid milk comprising DHA for infant use and CN 1200241 describe a milk based drinking liquid comprising DHA.

However, none of these references discuss the problem of off-flavour and unpleasant taste.

US 5 976 606 describes a process for producing DHA-containing tofu or soybean milk drink, comprising the use of soybean milk as both base and emulgation agent. In this document it is said that ordinary used emulgation agents have a negative influence on tofu. The soybean milk is said to, mask to a certain extent the fish smell.

Abstract of JP-A-6169735 discloses a composition comprising a fish oil containing eicosapentaenic and docosahexaenic acid (PUFAs), an oil from Perilla frutescens Britton, Labiatae, containing alfa-linoleic acid, maize oil, water and one or more additives. In the document linolenic acid is alledged to act as an antioxidant for eicosapentenic and docosahexaenic acid.

Abstract of JP-A-04 131 043 discloses a composition comprising a purified fish oil and a purified perilla oil or purified oil. It is alledged that the composition has an extremely reduced offensive smell of fish oil.

### Brief disclosure of the invention

We have now surprisingly found that by including a protecting oil, specifically oat oil or oat bran oil, in a PUFA containing food composition any off-flavour, such as the unpleasant taste and smell of fish may be reduced or substantially eliminated.

Furthermore, we have surprisingly found that by including a protecting oil, specifically oat oil or oat bran oil, in a food composition to be sterilised any off-flavour, such as the off-flavour of cooked taste, is reduced or substantially eliminated.

Thus, the present invention provides a composition as defined in claim 1 comprising a milk portion or an aqueous portion, one or more polyunsaturated fatty acids (PUFAs) or a mixture thereof, a protecting oil and optionally one or more additives; the composition being substantially free from any off-flavour resulting either from chemical reactions of the PUFAs or chemical reactions from the sterilisation/high temperature treatment of the milk portion.

In one embodiment the polyunsaturated fatty acids are polyunsaturated fatty acids (PUMAS) of the omega-3 series of PUFAs.

In a further embodiment the protecting oil is oat oil.

The invention also provides emulsion products comprising said composition and food products prepared from said emulsion products.

Further the invention provides a process for the production of said emulsion product, the process comprising the steps of
I:
   a) providing a milk portion;
   b) adding to the milk portion a protecting oil, or a protecting oil and one or more polyunsaturated fatty acids (PUFAs) or a mixture thereof and optionally one or more additives to form a milk portion-oil mixture; and
   c) emulsifying the milk portion-oil mixture to form an emulsion; wherein the emulsifying is taken place in immediate connection with the addition of the protecting oil or protecting oil and one or more polyunsaturated fatty acids (PUFAs) or a mixture thereof to the milk portion, or
II:
   a) providing an aqueous portion;
   b) adding to the aqueous portion a protecting oil, or a protecting oil and one or more polyunsaturated fatty acids (PUFAs) or a mixture thereof, one or more emulsifiers and optionally one or more additives to form a aqueous portion-oil mixture;
   c) emulsifying the aqueous portion-oil mixture to form an emulsion; and
   d) adding the emulsion to a milk portion,
wherein the emulsifying is taken place in immediate connection with the addition of the protecting oil or the protecting oil and one or more polyunsaturated fatty acids (PUFAs) or a mixture thereof to the aqueous portion.

Still further the invention provides a method of preventing an off-flavour in a food product comprising the steps of providing a milk portion or an aqueous portion and adding to the milk or aqueous portion an amount of a protecting oil sufficient enough to prevent any off-flavour.

Thus, by means of the present invention we are able to increase the supply of acceptable and convenient food products having a high nutritional value.

### Brief description of drawings

Fig 1 and 2 is a schematic view showing one embodiment of a process for the production of an emulsion product according to the invention.
Fig 3 is a schematic view showing the metabolism of omega-6 and omega-3 PUFAs.

### Detailed disclosure of the invention

The term "milk " is in this context intended to mean animal milk, such as milk from cows, horses and goats, and milk-like products based on vegetable sources, such as oat milk, soy milk and coconut milk.

The term "PUFA" is in this context intended to mean a polyunsaturated fatty acid in general terms. Specifically contemplated are the polyunsaturated fatty acids (PUFAs) having at least a C₁₈-carbon chain.

The term "PUFA oil" is in this context intended to mean an oil in general terms, which is extractable from sources such as fish, algae, phytoplankton, fungi or plants by conventional methods, or being synthetically or biogenetically produced and which is composed mainly of triglycerides, diglycerides, monoglycerides or more polar lipids, such as phospholipids, glycolipids, galactolipids or the like containing polyunsaturated fatty acids as defined under "PUFA" above.

The term "protecting oil" is in this context intended to mean an oil which has a protecting effect on the chemical reactions, such as degradation reactions resulting in an off-flavour. Specifically contemplated are chemical reactions of PUFAs, such as oxidation reactions, and chemical reactions resulting from sterilisation or high temperature treatment of a milk product giving a cooked taste. By protecting the PUFAs any off-flavour, such as the fish taste and fish smell resulting from chemical degradation, e.g. oxidation of the omega-3 series of PUFAs, is prevented, reduced or substantially eliminated.

The term "emulsion product" is in this context intended to mean an emulsified product comprising a milk or aqueous portion and a protecting oil or a protecting oil and one or more PUFAs and/or PUFA oils as defined above. Such an emulsion product may be included in food compositions or functional food preparations with or without additives as defined below.

The term "off-flavour" is in this context intended to mean any peculiar taste or smell resulting from chemical reactions, such as degradation reactions of PUFAs and PUFA oils, specifically the taste and smell of fish coming from products of omega-3 series of PUFAs and PUFA oils or the chemical reaction leading to a cooked taste and smell in milk.

The term "substantially free from any off-flavour" is in this context intended to mean that the off-flavour is prevented, reduced or substantially eliminated.

The term "aqueous portion" is in this context intended to mean water or any composition partly comprising water.

The term "additive(s)" is in this context intended to mean any added compound suitable for use in a food product.

The term "sterilisation" is in this context intended to mean generally known and accepted sterilisation conditions within food industry.

The term "high temperature treatment" is in this context intended to mean any heat treatment known within food industry from low pasteurisation up to sterilisation.

The present invention provides a solution to the problem with unpleasant off-flavours either resulting from sterilisation or high temperature treatment of milk products, such as the cooked taste of milk, or resulting from oxidation reactions or the creation of degradation products of PUFAs. The degradation reactions of PUFAs lead in general to an unpleasant taste and smell of fish.

The above mentioned cooked taste may be explained as follows. When heat treatments in excess of those employed for pasteurisation are used in the processing of milk, varying degrees of flavour change may be noted. At or about 74°C a distinct cooked flavour commences to develop. This flavour arises from the -SH groups activated by heat denaturation of β-lactoglobulin and proteins of the fat globule membrane. The flavour is specifically due to volatile sulfides, and hydrogen sulfide (H₂S) in particular. The precise mechanism of H₂S formation from the -SH groups in these proteins is unknown. In general oxidising conditions inhibit and reducing conditions favour sulfide formation. It is known that in the region, in which cooked flavour is formed in milk, there is a lowering of the oxidation-reduction potential. The exact reasons for this phenomenon have not been adequately demonstrated.

The polyunsaturated fatty acids or PUFAs suitable for the invention are any PUFAs, but preferably PUFAs having a carbon chain of at least 18 carbon atoms, i.e. having at least a C₁₈-carbon chain, such as a C₁₈-, C₂₀-, or C₂₂- carbon chain.

The PUFAs are preferably added in the form of an oil comprised mainly of triglycerides, diglycerider, monoglycerides or more polar lipids containing these polyunsaturated fatty acids. Examples of polar lipids are phospholipids, glycolipids and galactolipids. The fatty acids may also be added in the form of other fatty acid containing compounds, such as esters.

Examples of PUFAs considered to be useful in the present application are PUFAs from the n-6 and the n-3 series, such as linoleic and alpha-linolenic acid or any of their natural metabolites (See fig.3). Specifically contemplated are PUFAs of the omega-3 series, such as ALA (alpha-linolenic acid, 18:3) EPA (eicospentaenoic acid, 20:5) and DHA (docosahexaenoic acid, 22:6). The preferred PUFA to be used according to the present invention is DHA or a mixture of PUFAs comprising DHA or a PUFA oil comprising DHA. Also preferred according to the present invention is a mixture of DHA and EPA, either in the form of a PUFA mixture alone or in combination with other PUFAs or as components of a PUFA oil. The PUFA oil preferably contains at least 10 % by weight of one or more PUFAs, specifically 10, 20, 30, 40 or 50 % by weight. In one embodiment of the invention the PUFA oil contains 10-50 % by weight of DHA and 0-20 % by weight of EPA.

The PUFAs or the PUFA oil according to the invention may be extracted from fish, plants, phytoplankton or algae, such as micro algae, or extracted from any other appropriate source. Examples of preferred PUFA oils according to the invention are fish oils, such as oil from tuna fish, shark, salmon, mackerel, herring, sardines, pollack, sturgeon, anchovies, sprats, and halibut and oils from a marine vegetable micro algae. Examples of plant oils are linseed oil from linseed and Perilla oil derived from Asian Beefsteak plant. One example of a micro algae oil is MARTEK DHASCO®. According to one embodiment of the invention the PUFA oil contains 25 - 45 % by weight of DHA and 0- 10 % by weight of EPA.

The extraction may be performed by conventional methods, or the PUFAs may be synthetically or biogenetically produced. In a preferred embodiment a DHA containing PUFA oil extracted from fish oil or micro algae is used. The oil may be used in non-purified, purified or highly purified form, concentrated or non-concentrated. Examples are DHA containing oils from tuna fish or marine micro algaes. Alternatively it may be synthetically produced.

The protecting oil according to the invention is an oil having the effect of reducing or substantially eliminating chemical reactions resulting in off-flavour degradation products. Specifically contemplated is the reduction or substantial elimination of oxidation reactions of PUFAs, which thereby reduces or substantially eliminates the creation of degradation products of PUFAs, specifically from the omega-3 PUFAs like DHA and EPA, giving the taste and smell of fish.

One specific example of oat oil is an ethanol extracted oat bran oil provided by Swedish Oat Products AB, Bua hamn, Väröbacka, Sweden. Oat oil has a very specific mixture of antioxidants, such as avenantramides and tocopherols, and polar lipids, such as digalactodiacylglycerol (DGDG). Oat oil has in the present invention shown to give very favourable results. Specifically contemplated protecting oils are oils having a similar mixture of polar lipids and antioxidants as oat oil.

The milk may be any portion of animal milk, such as milk from cows, horses and goats, and other milk-like products based on vegetable sources, such as oat milk, soy milk and coconut milk. Examples of milk portions suitable to be used in the present invention are cow milk and cream based on cow milk. Contemplated is milk from natural sources as well as synthetically prepared, milk products having different fat content, infant milk etc.

In one embodiment of the invention the composition of the invention comprises a milk portion or an aqueous portion, a protecting oil and one or more PUFAs, as defined above, or a mixture thereof and possibly one or more additives. Oat bran oil is a preferred protecting oil. The protecting oil may be mixed with a PUFA oil in a ratio (protecting oil : PUFA oil) within any range; such as from 0.1 :1 to 100:1. Specifically from 0.2:1 to 4:1, more specifically 0.5:1 to 2:1 and even more specifically in the ratio of 1:1.

In still another embodiment of the invention the composition of the invention comprises a milk portion, which is sterilised/high temperature treated or to be sterilised/high temperature treated, a protecting oil, one or more PUFAs, as defined above, or a mixture thereof, and possibly one or more additives.

Furthermore, the invention refers to emulsions comprising the above composition.

In one embodiment of the invention the emulsion of the invention comprises a milk portion or an aqueous portion and one or more PUFAs, as defined above, or a mixture thereof in combination with a protecting oil and possibly one or more additives. Oat bran oil is the most preferred protecting oil. The protecting oil may be mixed with a PUFA oil in a ratio (protecting oil : PUFA oil) within any range; such as from 0.1 :1 to 100:1. Specifically from 0.2:1 to 4:1, more specifically 0.5:1 to 2:1 and even more specifically in the ratio of 1:1.

In still another embodiment of the invention the emulsion of the invention comprises a milk portion, which is sterilised/high temperature treated or to be sterilised/high temperature treated, a protecting oil, one or more PUFAs, as defined above, or a mixture thereof, and possibly one or more additives.

In the case of a composition or emulsion including PUFAs the composition or emulsion product preferably includes PUFAs, as defined above, in a range corresponding to the intake of PUFAs recommended by the Nordic Health Authorities, in "Nordiska näringsrekommendationer, Nord 1996:28". Nord 1996:28 specifically recommends, for adults and children above the age of 3, the amount of the sum of omega-6 and omega-3 PUFAs to be at least 3 % of the energy intake (E%), of which omega-3 PUFAs are at least 0.5 E%. The recommended daily dose of e.g. DHA is around 220 mg/day/adult, for pregnant and lactating women at least 300 mg/day (J.Am.Coll ofNutr. 1999, 18:5, 487-489

The kind of additives that may be used in the composition, emulsion, or food product according to the invention include ingredients such as vitamins, minerals, antioxidants, such as tocopherols, flavouring agents, nutrients, stabilisers, preservation agents, etc. Contemplated are additives acceptable for food products, as well as additives acceptable for use in functional foods. Further examples of acceptable additives are colouring agents, sugars, buffers, disintegrating agents, suspending agents, solubilising agents, emulsifiers and enhancers. Examples of emulsifiers which may be used according to the invention are Na-caseinate, Ca-caseinate, lecithin, for instance produced from egg yolk or soy bean oil, or any other accepted food emulsifier.

The emulsifying step of the invention may be performed by any conventional emulsifying process known to the skilled man in the art or by means of one of the specific processes described below. For example, a 30 wt % emulsion of a triglyceride oil (such as a mixture of PUFA oil and protecting oil) in water or an aqueous solution is prepared by adding an emulsifier to the triglyceride oil. The oil phase as well as the aqueous phase are preheated and then the oil phase is added to the aqueous phase under high-shear mixing to prepare a pre-emulsion. The pre-emulsion is then subjected to high-pressure homogenisation.

Alternatively, the oil mixture (such as a mixture of PUFA oil and protecting oil) is added to milk in close connection to a homogenizer.

The composition or emulsion product may be presented in the form of a liquid composition or in the form of a dry powder. A dry powder may be formed by conventional methods, such as freeze-drying, spray-drying or vacuum-drying.

According to the invention there is provided a process for producing an emulsion product.

In one embodiment the process (process I) comprises the steps of
a) providing a milk portion;
b) adding to the milk portion a protecting oil, or a protecting oil and one or more polyunsaturated fatty acids (PUFAs) or a mixture thereof and optionally one or more additives to form a milk portion-oil mixture; and
c) emulsifying the milk portion-oil mixture to form an emulsion; wherein the emulsifying is taken place in immediate connection with the addition of the protecting oil or protecting oil and one or more polyunsaturated fatty acids (PUFAs) or a mixture thereof to the milk portion.

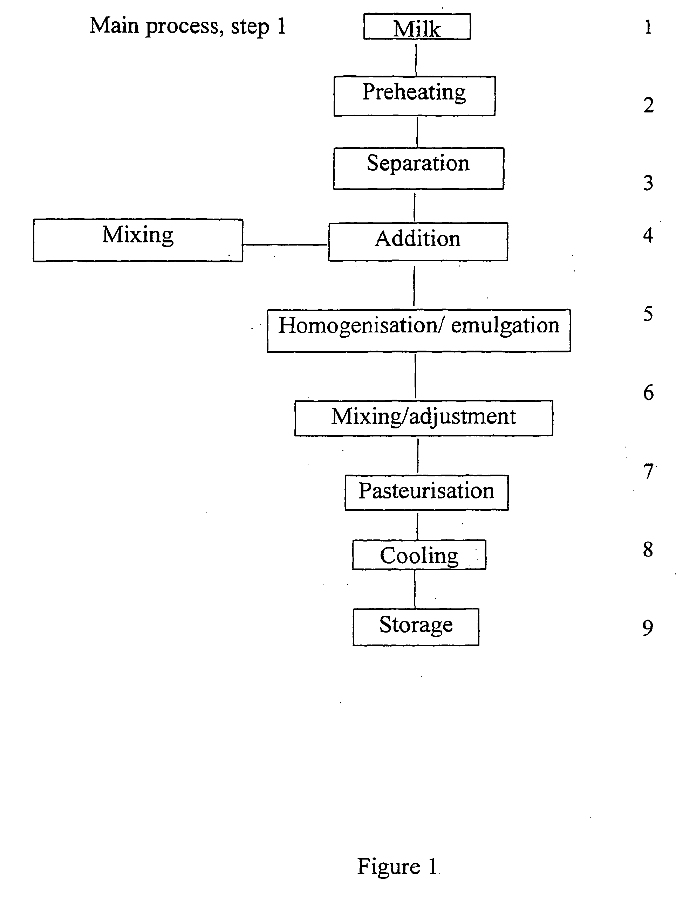

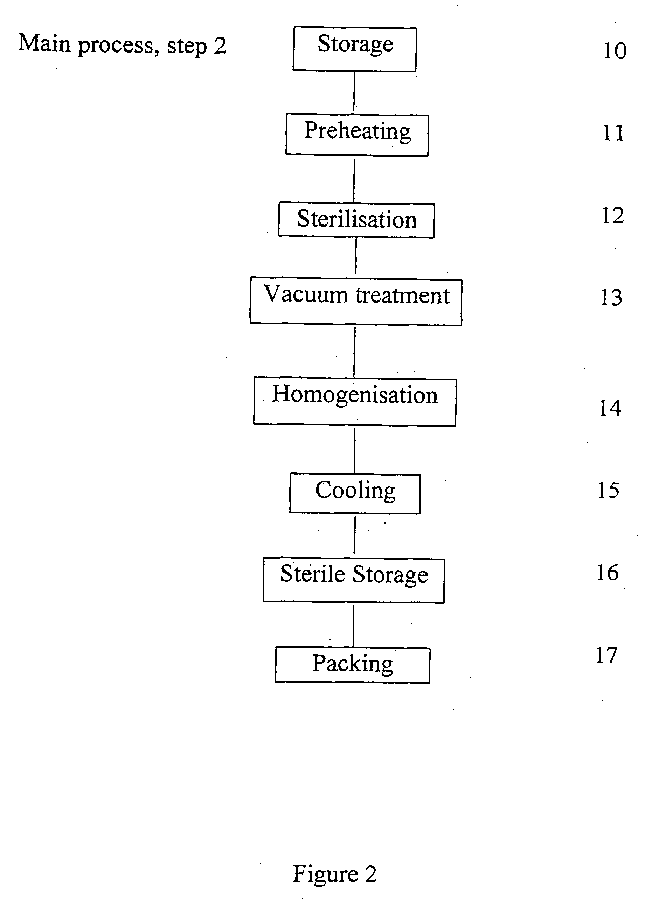

Process I for producing a emulsion product according to the invention is described with reference to one embodiment as shown in figs 1 and 2, wherein the process is performed as a two main step process. It is within the scope of the invention to modify the processes shown in figs 1 and 2, and such modifications are easily realised by the skilled man in the art.

In a first main process step the PUFA containing oil is mixed, as shown in fig 1 at 4, with the oat bran oil to produce an oil mixture or lipid composition. The ratio of PUFA containing oil to oat bran oil may be 0.5:1 to 2:1, the preferred range being 1:1. In this embodiment the oil mixture is added to the milk portion, in this case cow milk, through a bypass in a pipe in close connection to a homogenizer, as shown in fig 1 at 5. The addition of oil mixture to the milk may be performed in other ways. The oil mixture and the milk is then homogenized to emulsify the fat in the aqueous phase in the homogenizer at a pressure, such as between 100-200 mbar and subsequently the emulsion produced is pasteurised. The step of adding the oil mixture to the milk and subsequent emulgation is an important step and the addition is preferably made in close connection to the homogenisation/emulgation. The emulsion should preferably be established rapidly after addition of the oil mixture; i.e. the time between the addition of oil mixture to the milk and the emulgation should be as short as possible.

In a second step the emulsion is, according to the embodiment shown in fig 2, sterilised by direct steam injection. Other sterilisation processes may be used. The product from step 1 is taken directly or preheated, if necessary, and thereafter sterilised through steam injection at a temperature of above 100 °C, such as 140 °C, at a time of 2- 5 seconds. The sterile product is then introduced into a vacuum chamber (as shown in fig 2 at 14) and is optionally further homogenized (as shown in fig 2 at 15). The vacuum treatment is of importance for removing volatile compounds, which may give an off-flavour. Finally the product is cooled, stored and packaged. This process has shown to be particularly beneficial when mixing an omega-3 containing PUFA oil with oat oil and and adding said oil mixture to milk.

Alternatively the product from step 1 may be used directly, without the sterilisation step.

The process results in a product being substantially free from any fish taste and also being mainly free from the cooked taste normally encountered in sterilised milk products.

The emulsion from step 1 or 2 may further be used for the production of other products, such as cheese, ice cream and margarine. Furthermore the composition of the present invention may be included in products, such as cheese, ice cream and margarine, during the ordinary and conventional processes for their production.

According to a further embodiment of the invention there is provided a process (process II) for producing an emulsion according to the invention, comprising the steps of
a) providing a aqueous portion;
b) adding to the aqueous portion a protecting oil, or a protecting oil and one or more polyunsaturated fatty acids (PUFAs) or a mixture thereof, one or more emulsifiers and optionally one or more additives to form a aqueous portion-oil mixture;
c) emulsifying the aqueous portion-oil mixture to form an emulsion; wherein the emulsifying is taken place in immediate connection with the addition of the protecting oil or the protecting oil and one or more polyunsaturated fatty acids (PUFAs) or a mixture thereof to the aqueous portion, and
d) adding the emulsion to a milk portion. With reference to figures 1 and 2 the emulsion may be added to the milk portion at (6) in Figure 1. Alternatively the emulsion may be sterilised separately and added aseptically to milk at (15) in Figure 2.

The aqueous portion used in the process may be water, saline, milk from animal or vegetable sources, juice and syrup based on fruits, vegetables etc., optionally including additives such as vitamins, minerals, antioxidants, flavouring agents, nutrients and the like. The aqueous portion may in itself be part of an emulsion such as milk, cream, a vegetable or animal margarine or spread. It may be a water-in-oil emulsion or an oil-in-water emulsion. The emulsion in the process of the invention may prepared by mixing the aqueous portion and the oil mixture (PUFA and protecting oil) together with an emulsifier or mixing together the milk portion and oil mixture (PUFA and protecting oil). The mixing may be carried out by any conventional mixing method.

The sterilisation and high temperature treatment according to the invention is performed under, within the art generally accepted, sterilisation and high temperature treatment conditions. High temperature treatments include temperature treatments from low pasteurisation (e.g. 72 ° C, 15 seconds) to sterilisation.

The present invention also refers to food products including the composition or the emulsion product as described above. Examples of such products are milk and milk based products, cream and cream based products, juice, fruit soups, cheese, ice cream, ice cream soda, spreads, butter, sausage, pâtés, such as pâté from liver, dried powders or grains, etc.

The amount of PUFA in the food product depends i.a. on the actual type of food product. Preferably the PUFAs included correspond to the recommended daily intake, as referred to above. When, for example, the PUFA is DHA the dose given through the food product is calculated to at least a recommended daily dose of around 220 mg/day/adult.

The preferred protecting oil to be used in the present invention is oat bran oil. Oat bran oil contains around 25% polar lipids, including both phospholipids and galactolipids. Moreover, oat bran oil has a high concentration of different antioxidants, e.g. avenantramines. Such an oat bran oil may be provided by Swedish Oat Products.

A specific example of a food product according to the invention is an oat milk product including an oil mixture of a protecting oil, such as oat oil, and an omega-3 PUFA, such as DHA or a combination of DHA and EPA.

Another specific example of a food product according to the invention is a fruit juice, a milk product or a product being a combination of a fruit juice and a milk product including an oil mixture of a protecting oil, such as oat oil, and an omega-3 PUFA, such as DHA or a combination of DHA and EPA.

According to a preferred embodiment the oat bran oil is mixed with a PUFA oil DHA, e.g. containing 25-40 % by weight of DHA and this oil mixture is added to cow milk to produce an emulgated milk product. One example of such a milk product is produced according to the preferred process as described above and according to example 1.

According to a further embodiment the invention refers to a method of preventing an off-flavour in a food product comprising the steps of providing a milk portion or an aqueous portion and adding to the milk or aqueous portion an amount of a protecting oil sufficient enough to prevent any off-flavour.

In one embodiment of the method the protecting oil is an oat oil, such as oat bran oil, in a mixture with milk. When sterilised, e.g. according to the process of the invention, the resulting milk product is substantially free from the off-flavour of cooked taste. This is surprising since all sterilised milk based products generally have a very distinct cooked taste.

In another embodiment of the method the protecting oil is an oat oil, such as oat bran oil, which is added to a PUFA oil, such as omega-3 PUFAs, e.g. a mixture of DHA and EPA. The mixture of oat oil and PUFA is then added to a milk portion or an aqueous portion. The addition of PUFAs to milk or aqueous portions generally gives a taste of fish, but when used according to the invention in connection with a protecting oil, such as oat oil, the resulting product is substantially free from any such taste. When such product is sterilised it is also free of any off-flavour of cooked taste, when produced according to the present invention.

Omega-3 PUFAs and especially, DHA and EPA, have recently attracted attention as having a wide variety of physiological activities. They are known to have an antithrombogenic activity, an anti-inflammatory acitivity, an antiallergic activity and an antitumor activity. Moreover, they are known to be important in developing and maintaining nerve tissue of brain, retina and the like. They are especially important to pregnant and milk feeding women.

Thus, the composition and the emulsion according to the present invention may be used in the form of a functional food preparation for preventing thrombogenic, inflammatory, allergic and tumour disorders or diseases, such as arteriosclerosis, cerebral embolism, myocardic infarction, cardio-cerebral vascular diseases. They may also be used to enhance the body immune system.

The functional food preparation may be in any suitable oral form. Examples of suitable oral forms are syrups, emulsions, solutions and suspensions. It may be combined with any additives acceptable for use in functional food preparations, such as those mentioned above.

By means of present invention there is provided food products being substantially free from any off-flavour either resulting from chemical reactions of the added PUFAs or from chemical reactions from the sterilisation/high temperature treatment of the milk portion, or free from a combination of such off-flavour.

Without being bound to any specific theory we believe that the effect of the protecting oil is substantially to prevent chemical reactions, like oxidation of the PUFAs, which may result in an off-flavour when in contact with a milk portion, such as milk or an aqueous portion, such as fruit juice.

The invention is further described in the following examples.

### Examples

### Example 1

### Preparation of milk containing 300 mg DHA per litre

Reference is made to figs 1 and 2. In a first step 3000 litres of cow milk, containing 4 % by weight of fat and having a temperature of 4°C (1), were preheated in a plate heat exchanger (Alfa Laval H10) to 60 °C (2). The fat portion or cream was then separated from the preheated milk (3) in a Alfa Laval separator (HMRPX 614 HGV 74C 50). At (4) 2,25 kg DHA oil (MARTEK DHASCO®). (containing 40 % by weight DHA) was premixed with 2,25 kg oat bran oil from Swedish Oat Products, Väröbacka, Sweden, to form an omega-3 : protecting oil mixture in the ratio of 1:1. At (5) the oil mixture was added to the previously prepared cow milk. The oil mixture was added to the cow milk through a bypass in a pipe in close connection to a homogenizer (Rannie 45 72 s/n 1-85.340) at (6). Homogenisation of the milk/oil mixture gives an emulsion. The pressure in the homogenizer was 150 mbar. In the next sub step (7) the fat content was adjusted to a fat content of 0.5 % by weight by the addition of milk. This adjusted milk product is then pasteurised (8) at 77 °C and 16 sec. (Alfa Laval H10). Finally (9 and 10) the pasteurised milk product is cooled to a temperature of 6 °C and stored.

In a second main step (fig.2) the milk was sterilised (APV UH Palarisator) by direct steam injection. The milk product from main step 1 was preheated to 75 °C in a Alfa Laval H 10(12). The preheated milk was then sterilised in an APV UH Palarisator by direct steam injection at 140 °C during 3 seconds (13) followed by vacuum treatment (14) at 74 °C, homogenisation at 100-150 bar and cooling (16) to 20 °C. The resulting milk product is then transferred to a sterile tank (17) and packed (18) in 1 dm³ packages.

The milk product produced had no taste or smell of fish and moreover it did not have a cooked taste, which is often the case after sterilisation. Furthermore the product had a good shelf life of ≥ 6 months at both NTP and cold storage conditions.

### Example 2

### Preparation of sterilised milk

Example 1 was repeated, but with no addition of DHA, in order to examine the existence of any off-flavour of cooked taste. The same conditions as in example 1 were applied.

The resulting milk showed no off-flavour of cooked taste.

Further examples may be made in analogy with example 1, wherein the milk portion at stage 7 may be adjusted to other fat contents, such as a fat content of 3-12 % by weight.

### Example 3

### Compositions

3 different compositions according to the invention was prepared as follows:
Ingridients:
   *Eskimo-3 Cardinova, Sweden*
   DHA, 12%
   EPA, 18 %
   Other omega-3, 8 %

   *Tuna fish oil, Pronova Biocare, Norway*
   DHA ≥ 25 % (oil used 32 %)
   EPA, 6 %

   *DHASCO, Martek, USA*
   DHA 40-45 % (380-420 mg/g)
   EPA < 0.1%

   *ARASCO, Martek, USA*
   Arachidonic acid (ARA, 20:4 n-6), 38-44 % (380-420 mg/g)

   *Oat bran oil, Swedish Oat Products AB, Sweden*

### Composition 1

2,1 g DHASCO + 1.1 g ARASCO was mixed with 3.2 g oat bran oil. The oil mixture was added to 3 dm³ skimmed milk and directly homogenized. 280 mg DHA and 150 mg ARA per dm³ milk.

### Composition 2

50 g Eskimo-3 was mixed with 50 g oat bran oil. The oil mixture was added to 5 dm³ skimmed milk and directly homogenized.
1.2 g DHA and 1.8 g EPA per dm³ milk.

### Composition 3

50 g Tuna fish oil was mixed with 50 g oat bran oil. The oil mixture was added to 10 dm³ skimmed milk and directly homogenized.
625 mg DHA and 300 mg EPA per dm³ milk.

All the above three compositions were tested as regards any taste or smell of fish, as well as any cooked taste or smell of milk. They were all found to be free of such taste or smell.

### Example 4

2,25 kg DHA oil (MARTEK DHASCO) was premixed with 2.25 kg oat bran oil (Swedish Oat Products) in the ratio 1:1. The oil mixture was added to 3 dm³ of an aqueous phase together with 3 % of the emulsifier Na-caseinate and homogenized directly thereafter to form an emulsion. The homogenization is as follows: the oil phase as well as the aqueous phase are preheated and then the oil phase is added to the aqueous phase under high-shear mixing to prepare a pre-emulsion. The pre-emulsion is then subjected to high-pressure homogenisation.

In one experiment the emulsion was added to milk at (6) in Figure 1. In another experiment the emulsion was sterilized separately and added aseptically to milk at (15) in Figure 2.

## Claims

1. A food composition comprising a milk or aqueous portion, one or more polyunsaturated fatty acids (PUFAs) mixed with a smell reducing protective oil **characterised in that** said protective oil is selected from the group consisting of oat oil, and oat bran oil.

2. The composition of claim 1 where said protective oil is oat bran oil.

3. The composition of claim 1 where said protective oil is oat oil.

4. The composition according to claim 1, further comprising an aqueous portion.

5. The composition according to claim 1, further comprising a milk portion.

6. The composition according to claim 5 where said milk portion is sterilized and/or high temperature treated.

7. The composition according to any of claims 5-6, wherein the milk portion is an animal milk portion or a vegetable milk-like portion.

8. The composition according to claim 5, wherein the milk portion is an animal milk.

9. The composition according to claim 6, wherein the high temperature treatment is an ultra high temperature treatment.

10. The composition according to any of the claims 1-9, comprising a milk or aqueous portion, wherein the one or more polyunsaturated fatty acids is/are present in the form of a PUFA oil.

11. The composition according to claim 10, wherein the PUFA oil is an omega-3 PUFA oil including DHA and/or EPA.

12. The composition according to any of claims 10-11, wherein the PUFA oil is a fish oil, a micro algae oil or a mixture thereof.

13. The composition according to claim 8, wherein the milk portion is cow milk.

14. The composition according to claims 6, 7, 8, 9, 10, 11, or 12 being in a liquid or dry form.

15. An emulsion product comprising a composition according to any of the claims 6, 7, 8, 9, 10, 11 or 12 further comprising one or more emulsifiers.

16. The emulsion product according to claim 15, comprising a milk or aqueous portion, wherein the emulsifier is sodium or potassium caseinate.

17. Use of a composition according to any of claims 1-14 or an emulsion product according to claim 15 or 16 and comprising a milk or aqueous portion, as a food product.

18. Use according to claim 17 where said food product is an ice cream product, a cheese product, a cream product, a butter product, or a margarine product.

19. Use according to claim 17 where said food product is a milk product, or a fruit juice product, or a food product being a combination of a milk product and a fruit juice product.

20. The emulsion product according to claim 15-16 for the use as a functional food.

21. The composition according to claim 1-16 for the use as a functional food preparation for preventing thrombogenic, inflammatory, allergic or tumour disorders or diseases, or for enhancing the body immune system.

22. A process for the production of an emulsion product according to claim 15 or 16, comprising the steps of
I:
a) providing a milk portion;
b) adding to the milk portion a protecting oil, or a protecting oil and one or more polyunsaturated fatty acids (PUFAs) or a mixture thereof and optionally one or more additives to form a milk portion-oil mixture, wherein the protective oil(s) is selected from the group of oat oil, or oat bran oil or from a mixture of said oils; and
c) emulsifying the milk portion-oil mixture to form an emulsion;
wherein the emulsifying is taken place in immediate connection with the addition of the protecting oil or protecting oil and one or more polyunsaturated fatty acids (PUFAs) or a mixture thereof to the milk portion, or
II:
a) providing an aqueous portion;
b) adding to the aqueous portion a protecting oil, or a protecting oil and one or more polyunsaturated fatty acids (PUFAs) or a mixture thereof, one or more emulsifiers and optionally one or more additives to form a aqueous portion-oil mixture, wherein the protective oil(s) is selected from the group of oat oil, or oat bran oil or from a mixture of said oils;
c) emulsifying the aqueous portion-oil mixture to form an emulsion; and
d) adding the emulsion to a milk portion,
wherein the emulsifying is taken place in immediate connection with the addition of the protecting oil or the protecting oil and one or more polyunsaturated fatty acids (PUFAs) or a mixture thereof to the aqueous portion.

23. The process according to claim 22, wherein the aqueous portion is water or a fruit juice.

24. The process according to any of the claims 22-23, wherein the emulsifier is selected from the list of sodium or potassium caseinate.

25. The process according to any of the claims 22-24, wherein the milk portion is cow milk.

## Patentansprüche

1. Nahrungsmittelzusammensetzung umfassend einen Milch- oder Wasseranteil, eine oder mehrere polyungesättigte Fettsäure(n) (PUFAs), welche mit einem geruchreduzierenden, schützenden Öl gemischt ist/sind, **dadurch gekennzeichnet, dass** das schützende Öl aus der Gruppe bestehend aus Haferöl und Haferkleieöl ausgewählt ist.

2. Zusammensetzung nach Anspruch 1, wobei das schützende Öl Haferkleieöl ist.

3. Zusammensetzung nach Anspruch 1, wobei das schützende Öl Haferöl ist.

4. Zusammensetzung nach Anspruch 1, welche ferner einen Wasseranteil umfasst.

5. Zusammensetzung nach Anspruch 1, welche ferner einen Milchanteil umfasst.

6. Zusammensetzung nach Anspruch 5, wobei der Milchanteil sterilisiert und/oder hochtemperaturbehandelt ist.

7. Zusammensetzung nach einem der Ansprüche 5-6, wobei der Milchanteil ein tierischer Milchanteil oder ein pflanzlicher, milchähnlicher Anteil ist.

8. Zusammensetzung nach Anspruch 5, wobei der Milchanteil eine pflanzliche Milch ist.

9. Zusammensetzung nach Anspruch 6, wobei die Hochtemperaturbehandlung eine Ultrahochtemperaturbehandlung ist.

10. Zusammensetzung nach einem der Ansprüche 1 bis 9, umfassend einen Milch- oder Wasseranteil, wobei die eine oder die mehreren polyungesättigte(n) Fettsäure(n) in Form eines PUFA-Öls vorliegt/vorliegen.

11. Zusammensetzung nach Anspruch 10, wobei das PUFA-ÖI ein DHA und/oder EPA enthaltendes Omega 3 PUFA-ÖI ist.

12. Zusammensetzung nach einem der Ansprüche 10 bis 11, wobei das PUFA-ÖI ein Fischöl, ein Mikroalgenöl oder eine Mischung davon ist.

13. Zusammensetzung nach Anspruch 8, wobei der Milchanteil Kuhmilch ist.

14. Zusammensetzung nach den Ansprüchen 6, 7, 8, 9, 10, 11 oder 12, welche in einer flüssigen oder einer trockenen Form vorliegt.

15. Emulsionsprodukt umfassend eine Zusammensetzung nach einem der Ansprüche 6, 7, 8, 9, 10, 11 oder 12, welches ferner einen oder mehrere Emulgatoren umfasst.

16. Emulsionsprodukt nach Anspruch 15, welches einen Milch- oder Wasseranteil umfasst, wobei der Emulgator Natrium- oder Kaliumkaseinat ist.

17. Verwendung einer Zusammensetzung nach einem der Ansprüche 1 bis 14 oder eines einen Milch- oder Wasseranteil enthaltenden Emulsionsproduktes nach Anspruch 15 oder 16 als ein Lebensmittelprodukt.

18. Verwendung nach Anspruch 17, wobei das Lebensmittelprodukt ein Eisprodukt, ein Käseprodukt, ein Sahneprodukt, ein Butterprodukt oder ein Magarineprodukt ist.

19. Verwendung nach Anspruch 17, wobei das Lebensmittelprodukt ein Milchprodukt oder ein Fruchtsaftprodukt oder ein Lebensmittelprodukt ist, welches eine Kombination eines Milchproduktes und eines Fruchtsaftproduktes ist.

20. Emulsionsprodukt nach Anspruch 15 bis 16 zur Verwendung als ein Funktionsnahrungsmittel.

21. Zusammensetzung nach Anspruch 1 bis 16 zur Verwendung einer Funktionsnahrungsmittelzubereitung zur Vorbeugung von thrombogenen, inflammatorischen, allergischen Störungen oder Erkrankungen oder Tumorstörungen oder -Erkrankungen oder zur Stärkung des humanen Immunsystems.

22. Verfahren zur Herstellung eines Emulsionsproduktes nach Anspruch 15 oder 16, umfassend die folgenden Schritte:
I:
a) Bereitstellen eines Milchanteils;
b) Zugabe eines schützenden Öls oder eines schützenden Öls und einer oder mehrerer polyungesättigten Fettsäure(n) (PUFA's) oder einer Mischung davon und wahlweise eines Additivs oder mehrerer Additive zum Milchanteil zur Bildung einer Milchanteil-Ölmischung, wobei das/die schützende(n) ÖI(e) aus der Gruppe bestehend aus Haferöl oder Haferkleieöl oder aus einer Mischung von den Ölen ausgewählt ist/sind; und
c) Emulgieren der Milchanteil-Ölmischung zur Bildung einer Emulsion;
wobei das Emulgieren in unmittelbarem Zusammenhang mit der Zugabe des schützenden Öls oder des schützenden Öls und eines oder mehrerer polyungesättigten Fettsäure(n) (PUFA's) oder einer Mischung davon zum Milchanteil erfolgt, oder
II:
a) Bereitstellen eines Wasseranteils;
b) Zugabe eines schützenden Öls oder eines schützenden Öls und einer oder mehrerer polyungesättigten Fettsäure(n) (PUFA's) oder einer Mischung davon, eines Emulgators oder mehrerer Emulgatoren und wahlweise eines Additivs oder mehrerer Additive zum Wasseranteil zur Bildung einer Wasseranteil-Ölmischung, wobei das/die schützende(n) ÖI(e) aus der Gruppe bestehend aus Haferöl oder Haferkleieöl oder aus einer Mischung von den Ölen ausgewählt ist/sind;
c) Emulgieren der Wasseranteil-Ölmischung zur Bildung einer Emulsion; und
d) Zugabe der Emulsion zu einem Milchanteil,
wobei das Emulgieren in unmittelbarem Zusammenhang mit der Zugabe des schützenden Öls oder des schützenden Öls und eines oder mehrerer polyungesättigten Fettsäure(n) (PUFA's) oder einer Mischung davon zum Wasseranteil erfolgt.

23. Verfahren nach Anspruch 22, wobei der Wasseranteil Wasser oder ein Fruchtsaft ist.

24. Verfahren nach einem der Ansprüche 22 bis 23, wobei der Emulgator aus der Liste von Natrium oder Kaliumkaseinat ausgewählt ist.

25. Verfahren nach einem der Ansprüche 22 bis 24, wobei der Milchanteil Kuhmilch ist.

## Revendications

1. Composition alimentaire comprenant une portion de lait ou une portion aqueuse, un ou plusieurs acides gras polyinsaturés (AGPI) mélangés avec une huile de protection et réductrice d'odeur
**caractérisée en ce que**
l'huile de protection est choisie parmi le groupe composé par l'huile d'avoine et l'huile de son d'avoine.

2. Composition selon la revendication 1, dans laquelle ladite huile de protection est l'huile de son d'avoine.

3. Composition selon la revendication 1, dans laquelle ladite huile de protection est l'huile d'avoine.

4. La composition selon la revendication 1, comprenant en outre une portion aqueuse.

5. Composition selon la revendication 1, comprenant en outre une portion de lait.

6. Composition selon la revendication 5, dans laquelle ladite portion de lait est stérilisée et/ou traitée à haute température.

7. Composition selon l'une quelconque des revendications 5 à 6, dans laquelle la portion de lait est une portion de lait animal ou une portion semblant au lait végétal.

8. Composition selon la revendication 5, dans laquelle la portion de lait est un lait animal.

9. Composition selon la revendication 6, dans laquelle le traitement à haute température est un traitement à ultra-haute température.

10. Composition selon l'une quelconque des revendications 1 à 9, comprenant une portion de lait ou une portion aqueuse, dans laquelle un ou plusieurs acides gras polyinsaturés est / sont présent(s) sous la forme d'une huile AGPI.

11. Composition selon la revendication 10, dans laquelle l'huile AGPI est une huile AGPI oméga 3 comprenant DHA et/ou EPA.

12. Composition selon l'une quelconque des revendications 10 à 11, dans laquelle l'huile AGPI est une huile de poisson, une huile d'algues micro ou un mélange de celles-ci.

13. Composition selon la revendication 8, dans laquelle la portion de lait est du lait de vache.

14. Composition selon les revendications 6, 7, 8, 9, 10, 11 ou 12 étant sous une forme liquide ou sèche.

15. Produit d'émulsion comprenant une composition selon l'une quelconque des revendications 6, 7, 8, 9, 10, 11 ou 12 comprenant en outre un ou plusieurs émulsifiants.

16. Produit d'émulsion selon la revendication 15, comprenant une portion de lait ou une portion aqueuse, dans laquelle l'émulsifiant est le sodium ou le caséinate de potassium.

17. Usage d'une composition selon l'une quelconque des revendications 1 à 14 ou d'un produit d'émulsion selon la revendication 15 ou 16 et comprenant une portion de lait ou une portion aqueuse, en tant qu'un produit alimentaire.

18. Usage selon la revendication 17, dans lequel ledit produit alimentaire est un produit de crème glacée, un produit de fromage, un produit de crème, un produit de beurre ou un produit de margarine.

19. Usage selon la revendication 17, dans lequel ledit produit alimentaire est un produit de lait, ou un produit de jus de fruit, ou produit alimentaire étant une combinaison d'un produit de lait et d'un produit de jus de fruit.

20. Produit d'émulsion selon les revendications 15 à 16 à utiliser en tant qu'une préparation alimentaire fonctionnelle.

21. Composition selon les revendications 1 à 16 à utiliser en tant qu'une préparation alimentaire fonctionnelle pour prévenir des troubles ou maladies thrombogènes, inflammatoires, allergiques ou tumorales, ou pour renforcer le système immunitaire du corps.

22. Procédé pour la production d'un produit d'émulsion selon la revendication 15 ou 16, comprenant les étapes consistant à
I:
a) la fourniture d'une portion de lait,
b) l'addition à la portion de lait d'une huile de protection ou d'une huile de protection et d'un ou plusieurs acides gras polyinsaturés (AGPI) ou d'un mélange de ceux-ci et éventuellement d'un ou de plusieurs additifs pour former un mélange de la portion de lait et de l'huile, l'huile ou les huiles de protection étant choisies parmi le groupe composé par l'huile d'avoine et l'huile de son d'avoine ou par un mélange desdites huiles; et
c) l'émulsification du mélange de la portion de lait et de l'huile pour former une émulsion; l'émulsification étant réalisée en connexion immédiate avec l'addition de l'huile de protection ou de l'huile de protection et d'un ou de plusieurs acides gras polyinsaturés (AGPI), ou d'un mélange de ceux-ci à la portion de lait, ou
II:
a) la fourniture d'une portion aqueuse,
b) l'addition à la partie aqueuse d'une huile de protection ou d'une huile de protection et d'un ou plusieurs acides gras polyinsaturés (AGPI) ou d'un mélange de ceux-ci, d'un ou de plusieurs émulsifiants et éventuellement d'un ou de plusieurs additifs pour former un mélange d'une portion aqueuse et de l'huile, l'huile ou les huiles de protection étant choisies parmi le groupe composé par l'huile d'avoine et l'huile de son d'avoine ou par un mélange desdites huiles;
c) l'émulsification dudit mélange d'une portion aqueuse et de l'huile pour former une émulsion; et
d) l'addition de l'émulsion à une portion de lait, l'émulsification étant réalisée en connexion immédiate avec l'addition de l'huile de protection ou de l'huile de protection et d'un ou de plusieurs acides gras polyinsaturés (AGPI), ou d'un mélange de ceux-ci à la portion aqueuse.

23. Procédé selon la revendication 22, dans lequel la partie aqueuse est de l'eau ou un jus de fruit.

24. Procédé selon l'une quelconque des revendications 22 à 23, dans laquelle l'émulsifiant est choisi dans la liste du sodium ou du caséinate de potassium.

25. Procédé selon l'une quelconque des revendications 22 à 24, dans lequel la portion de lait est du lait de vache.
